# EUROPEAN PATENT SPECIFICATION

(11) **EP 2 734 047 B1**
(45) Date of publication and mention of the grant of the patent: **04.05.2016**
(21) Application number: 12743669.9
(22) Date of filing: 23.07.2012
(51) Int. Cl.: A23B 4/06

(54) **MEAT CONDITIONER**
FLEISCHAUFBEREITER
APPAREIL DE CONDITIONNEMENT DE VIANDE

(30) Priority: 21.07.2011 DK 201100561
(43) Date of publication of application: 28.05.2014
(73) Proprietor: Marel Iceland EHF, 210 Gardabaer (IS)
(72) Inventor: ZIEGLER, Henrik, 268361 Singapore (SG)
(74) Representative: Patentgruppen
(86) International application number: PCT/DK2012/050277
(87) International publication number: WO 2013/010551

(56) References cited:
- EP-A1- 1 967 075
- WO-A1-03/024235
- US-A- 2 752 252
- US-A- 4 714 618

## Description

### Field of the Invention

The present invention relates to a method of conditioning meat such that the further processing is optimised. Furthermore, the invention is also directed at an apparatus for conditioning of meat which facilitates the inventive method.

### Background of the Invention

When it comes to slaughtering domestic animals such as cattle, pig, sheep, chicken but also fish, it is sometimes advantageous to freeze a whole or a substantially complete corpse/carcass without cutting it up into special and dedicated cuts suitable for retail.

The reason for not cutting up the carcasses into the finished products may be many, but in some regions the buyers are willing to pay a higher price for certain cuts whereas in other regions other types of cuts are more prestigious and therefore also valuable. Therefore, depending on where geographically the carcasses are distributed the cuts may be different. A further reason is the fact that consumers also want different cuts for different seasons, such that for example during the summer cuts especially prepared for barbecuing are more attractive and valuable than other cuts.

These are just some of the reasons why it is advantageous to freeze down the entire carcass without cutting it up immediately for specific cuts/portions.

Usually, when the pieces of meat are taken from the freezer, they are left to thaw such that once they are completely unfrozen, the further processing such as forming, portioning, cutting or slicing treatment can be carried out easily due to the relatively soft consistency of the piece of meat.

During the cutting process the cutters, usually band saws or belt saws, will create a lot of cutting debris (corresponding to saw dust). Furthermore, during the thawing process the liquid in the meat will also thaw and so-called drip-losses will occur during which liquid will leave the piece of meat thereby lowering the overall weight of the piece of meat but also lowering the quality as the liquid contained in the meat is important for preparing a tender piece of meat.

GB 2468856 A relates to a meat patty freezing and packing line, i.e. a method of handling and packaging meat patties on a factory scale. In connection herewith it is briefly indicated that the meat patties are prepared on a large factory scale by tempering blocks of frozen meat products at about -18° C to a temperature of about - 4° C over a period of at least 8 hours. The tempered blocks are ground to relatively large pieces by means of a coarse grinder, followed by a mincing into minced meat. The minced meat are blended with ingredients and formed into meat patties at about -2° C. These meat patties are subsequently frozen to a temperature of about -18° C. Evidently, this process is dedicated to manufacture of meat patties, which are being made from frozen blocks of meat products, which are predestined for the manufacture of meat patties. The frozen blocks are evidently equal in size and other characteristics, whereby the tempering of the frozen blocks, which, however, has not been specified in any detail as regards method, means and other conditions, presumably can be performed by a standard procedure without taking particular considerations, since the items handled seem to be substantially identical.

US 2752252 discloses a process of tempering frozen meat.

### Object of the Invention

It is therefore an object of the present invention to provide a method of conditioning meat such that the further processing is optimised, wherein the disadvantages mentioned above are avoided and a lot of further advantages are achieved, including that a versatile method can be achieved.

### Description of the Invention

The invention addresses this by providing a method of conditioning meat such that the further processing is optimised, wherein the meat having a first temperature between -35 and -18 °C is introduced into a conditioner inside which conditioner a gas is circulated, by means of said gas the temperature is raised in the meat to a second temperature between -8 and -1.5 °C, more preferred -5 and -1.5 °C, with the meat being conveyed by a conveyor arranged inside the conditioner, at which said second temperature the still frozen meat is transported out of the conditioner, where said meat is processed at said second temperature, after which the processed meat is brought to a third temperature different from said second temperature.

Within this description the further processing of the frozen meat, may be any desired treatment such as for example forming, pressing and/or portioning, slicing or cutting and packaging treatment.

Further, within this description and claims it will be understood that meat and pieces of meat may be meat from animals and poultry in general, for example animals such as cattle, pig, sheep, etc., poultry such as chicken, etc., but also fish and even seafood in general including possibly shellfish, etc. Even further, as mentioned in the introductory part, a piece of meat, e.g. a piece of meat that has been frozen and must be processed, may be a whole carcass or a relatively large piece of a carcass, e.g. a quarter, larger cuts, etc., but it may also be smaller pieces, even smaller pieces such as portion cuts, etc. Further, it will be understood that two or more pieces of meat that has been frozen together, for example in a batch or assembly of smaller pieces that may have been frozen in blockform, are considered as pieces of meat in this context that may be subjected to the method and the apparatus according to the invention.

Even further, within this description and claims, the reference to water or liquid in the meat is to be understood as the naturally occurring juice/liquid/fluid present in the meat. The thermal characteristics of said juice/liquid/fluid varies depending on many factors such as type of meat, ash content, sugar, salt, fat, oil and water etc. Therefore in order to explain the principles of the invention water and ice are used as examples, even though the inventor is aware that in practice the liquid in the meat will have different thermal characteristics, although the major part of the liquid is water, and as such the properties are substantially similar to water, for the purpose of explaining the invention.

After the frozen meat, which is typically frozen for long-term storage at a temperature of -35 to - 18 °C the piece of meat before being treated or processed, for example during the forming, pressing and/or portioning, slicing or cutting process is introduced into a conditioner. Inside the conditioner gas is circulated such that the temperature in the meat is increased from the deep frozen state, i.e. -35 to - 18 °C, up to a second temperature in the range of -8 to -1.5 °C. At this temperature range the meat is still frozen, and there is no free water present in the piece of meat although the meat has achieved a consistency where it may be shaped so that the meat is between the very stiff and hard deep frozen state and a fully thawed state. By introducing the conditioned meat having a temperature in the range of -8 to -1.5 °C into the further processing treatment, the cutting process is not hampered by the lightly frozen meat in that the knives or band saws will easily cut through the meat at these temperatures which would not be possible in the deep frozen state of -35 to - 18 °C and at the same time the cutting loss due to the saws working through the meat is minimized. Furthermore, as the liquid in the meat is still in a frozen state, no drip-loss occurs whereby the quality and the weight of the meat is maintained such that the value and quality is preserved.

After the piece of meat leaves the conditioner, it is treated substantially immediately after leaving the conditioner, such that the temperature in the meat does not rise substantially above the temperature range from which it is taken from the conditioner. After having been treated the meat is brought back to the deep freezing temperature in the range -35 to - 18 °C or may be thawed and brought into the cooler for retail sales. If the meat is refrozen, the meat itself will not have been affected by the conditioning process inside the conditioner in that the liquid inside the piece of meat has not been thawed and as such the texture, the integrity and the quality of the meat is the same as before it was treated. This is due to the fact that the creation of ice crystals in the meat during the freezing process will impact on the meat quality as the ice formation increases the volume of the liquid which is being frozen by approximately 10% which may have serious impact on the meat tissue and thereby the meat quality. Research reveals that salts present in the meat will be adhered differently to the cell walls of the meat in frozen condition than in thawed condition. This fact also contributes or has an impact on the meat quality after having been frozen.

A further advantage of the present method is the fact that the process speed is much higher than the traditional treatment where meat is taken from a frozen condition to a fully thawed condition before being further process. As a large part of the liquid in the meat tissue is water or water based, this liquid will, when it has been brought into its frozen state, have heat conducting properties which is approx. 4 times better than the heat conducting properties of water. The heat conductivity (also called thermal conductivity) for ice (frozen water) is 2,02 W · m⁻¹ · K⁻¹ at 0 °C and 1,95 W · m⁻¹ · K⁻¹at - 20 °C, whereas for water at 20 °C it is 0,56 W · m⁻¹ · K⁻¹.

Therefore, by maintaining the entire piece of meat below the point where the liquid, which is in its frozen state, thaws, the high heat conductivity properties of the entire piece of meat is maintained. If the meat as is traditional is taken out of the freezer and left to thaw, the surface layers of the meat will become completely thawed before the core of the meat piece, and as such the thawed sections will break the heat conductivity and thereby the thawing process will be slowed down due to the difference in heat conductivity between the liquid phase and ice phase/stages of the liquids in the meat. When the meat, as is the case with the present invention, is maintained in a frozen state, the same heat conducting properties will be maintained throughout the piece of meat.

A further feature having influence on the speed of thawing is the fact that the phase transfer from ice to water requires approx. 80 times more energy in order to bring water from ice at 0 °C to water at 0 °C (the melting energy 334 J/gram divided by the thermal capacity of water ∼ 4,18 J/gram) as compared to bring the ice from -1 °C to ice at 0 °C.

Therefore, a process where a piece of meat is brought from a fully frozen condition, i.e. -35 to - 18 ° C and into a fully thawed condition, i.e. +2 or +3°C, not only requires a substantially larger amount of energy than bringing the same piece of frozen meat to a temperature in the inventive temperature range of - 8 to -1.5°C, but this also takes substantially longer time due to the heat conductivity properties of frozen phase versus liquid phase as explained above.

Naturally, as the thawing process is brought about by the circulation of a warmer gas (but still well below the liquids thaw-point), the surface layers of the piece of meat will attain the desired temperature faster than the core. When fully thawing a piece of meat, the surface of the meat will be fully thawed before the core of the meat is thawed. Due to the high heat conducting properties of frozen liquids mainly consisting of water the time necessary to bring the meat from the -35 to -18 °C temperature range to the conditioned temperature range -8 to -1.5° C is substantially less than bringing it to a fully thawed condition. In the inventive method it shall be noted that the gas which is circulated in the conditioner is warmer than the meat, in order to heat the meat from fx - 35°C to - 5 °C, but the gas is preferably colder than the temperature at which the frozen liquid in the meat thaws.

At the same time the meat will obtain a substantially plastic consistency such that it is possible to form and press the meat as desired without a substantial effort and especially when portioning, slicing or cutting the piece of meat due to the semi-rigid plastic state of the meat at this point nicer, easier and faster cuts are possible.

A further important aspect with the method according to the present invention is the fact that when the meat is in the frozen state, i.e. below -1.5 °C there is no free water present. When the meat has been frozen, the water content of the meat has been solidified into ice crystals, and when the meat is thawed again, a change from ice crystals to melted water will happen and a microbial reactivation will occur. However, as the conditioned meat in accordance with the invention is in the frozen state, no free water from melted ice crystals will be present, whereby the growth of bacteria is therefore severely hampered, and the overall hygiene and risk of contamination is thereby severely reduced. The growth of bacteria is dependent on water and heat and as neither is present only very limited bacteria activity is present.

In accordance with an advantageous embodiment of the invention, the conveying by said conveyor may be adapted to characteristics of the meat. In connection herewith it is noted that as the meat is being conveyed by a conveyor arranged inside the conditioner and as the conveying by said conveyor is adapted to characteristics of the meat, the method can be used for conditioning wide ranges of meat products, since the conveyor can e.g. be arranged and/or adjusted to be driven with a velocity adapted particularly to the specific type of meat products that are being conditioned and still result in conditioned meat products leaving the conditioner with the desired temperature, i.e. the specified second temperature. Thus, the conditioner conveyor can be adapted in consideration of e.g. the size and/or weight of the pieces of meat being feed into the conditioner, adapted in view of various dimensional parameters, e.g. pieces of meat that are relatively thick (high) or pieces that are relatively slim (thin), e.g. even slices, etc., which has influence on the time necessary for raising the temperature, the meat/fat ratio of the meat, bone content, etc. Thus, the method can be applied in a flexible and versatile manner.

According to a further advantageous embodiment, the characteristics of the meat may be selected from one or more of the following:
the weight of the meat, or
the width of the meat, or
the height of the meat, or
the geometrical shape of the meat, or
the type of the meat.

In a further advantageous embodiment of the invention means are provided for registering the temperature of at least one piece of meat inside the conditioner, where the temperature of said at least one piece of meat is used as input to a pre-programmed control unit, which unit controls the temperature inside the conditioner.

As already explained above, it is quite critical and important to the process that the meat is brought up to a temperature where the liquid inside the meat is not in its fluid state such that all the beneficial properties of the meat are still maintained, but the meat is brought into a plastic state, where it is easy to form, press, portion, slice or cut. Therefore, registering the temperature and controlling the temperature of the environment inside the conditioner according to a pre-programmed cycle is very important. The pre-programmed cycle is determined, based on experience such that for certain amounts of meat present inside the conditioner the programme will know how quickly the temperature may increase and the temperature gradient, i.e. the rate at which the temperature increases inside the conditioner, will also be an indicator to the control unit on how to control the temperature in the environment inside the conditioner.

In a further advantageous embodiment the method provides means for registering the temperature of at least one piece of meat inside the conditioner, which means for registering the temperature comprises means for registering the surface temperature of the meat, and/or an embedded temperature sensor in the at least one piece of meat for registering the core temperature of said at least one piece of meat.

Although the pre-programmed control unit should be able to control the temperature in the environment such that the optimal heating process of the meat in the temperature range from -35 to -18 °C to the temperature range -8 to -1.5 °C is achieved, this may be backed up in this embodiment by arranging a temperature probe inside at least one piece of meat such that both the surface temperature of the meat as well as the core temperature is registered and compared with the pre-programmed control unit's information such that a safe and reliable heating cycle is achieved inside the conditioner.

It is noted that in accordance with the invention and the particular embodiments described herein various means for registering the temperature may be used, as it will be apparent to the skilled person. Various principles and means may be used for measuring or detecting the temperature, such as e.g. various sensors, thermocouples, radiation detection means, etc. and further, it is apparent that contact sensors as well as contact-free sensors may be used. Means for registering the core temperature and/or the temperature inside a piece of meat, e.g. the temperature below the surface or deeper within the meat may comprise an embedded temperature sensor in the at least one piece of meat as mentioned above, for example a temperature sensor that is inserted into the frozen piece of meat and moved with the piece of meat during the conditioning in the conditioner. Further, one or more temperature measuring means may be located at specific locations along the conditioner conveyor route. Even further, it is apparent that communication of e.g. measuring signals from and/or to the measuring means may be performed in wired manner or wirelessly.

Further, it is noted that when reference is made to the core temperature, it will be understood that this is the temperature essentially within a piece of meat, e.g. a subsurface temperature, and that reference also may be made to an equalized core temperature, where temperature differences within the piece of meat are essentially insignificant for practical purposes.

In a still further advantageous embodiment of the invention the speed of said conveyor arranged inside the conditioner is regulated by input supplied to a control unit, where said input stems from one or more of the following:
- the temperature and/or velocity of the gas,
- the temperature of the meat, and/or
- the amount and/or type of meat present inside the conditioner.

The provision of a conveyor and in particular a so-called spiral conveyor, i.e. a conveyor where the conveyor belt is arranged to circulate in a spiral whereby a number of conveyor layers are arranged on top of each other, are especially preferred in that the floor space requirements for such a conveyor in comparison to the area of actual conveyor belt is very low and at the same time the volume in which the gas is to be circulated is relatively small such that much better utilization of the gas may be achieved. Furthermore, the conveyor can be arranged at a speed such that it is continuously operating whereby pieces of meat being introduced into the conditioner on a conveyor belt will after having travelled the length of the conveyor be delivered to the outlet side of the conditioner at the desired temperature in the range as mentioned above of -8 to -1.5 °C.

In order to control the correct heating of the pieces of meat and in particular that the meat does not overheat as already discussed above the conveyor is regulated by input supplied to a control unit where the input for example may be the temperature and/or the velocity of the gas. The velocity of the gas will due to normal thermodynamics be a measurement of how much energy is transferred to the pieces of meat over time and as such how fast the meat temperature changes. The same is naturally true with respect to the temperature of the gas, but relating to the temperature of the gas it is not possible just to use a very warm gas in that the gas needs to be kept at a temperature such that the surface layers of the meat does not thaw or is brought above the maximum temperature of -1.5°C or whatever is selected by the pre-programmed control unit in the range -8°C to -1.5 °C.

It is also possible to control the speed of the conveyor relative to the temperature of the meat such that by continuously measuring for example the surface temperature of the meat or the core temperature, it is possible to determine how much energy is transferred from the gas to the meat and thereby predict the time necessary for the meat to reach the desired temperature at which it can be delivered from the conditioner to further treatment. Finally for a number of applications the pieces of meat will be relatively uniform such that for example the carcass of a pig will have a certain almost standard weight. The standard weight is also indicative of how much energy is needed in order to raise the temperature from for example -30°C to -5°C, and as such the type of meat as well as the amount will give a relatively empiric figure on how much energy is necessary in order to bring the entire mass of meat up to the desired temperature and as such an indication of how much time is necessary and thereby which speed the conveyor should travel at in order to be able to transfer the heat energy from the gas to the meat.

The method may also combine two or more of the parameters above in order to control the process in the conditioner.

In this application the term gas is used, but in most applications the preferred type of gas will be air, but for other applications the air may contain substantial amounts of other gases in order to provide specific conditions in the conditioner.

In a further advantageous embodiment of the invention gas conditioning means and at least one fan is arranged inside the conditioner, where a control unit regulates the speed of the fan and thereby the gas velocity and/or the temperature to which the gas conditioning means treats the gas, by input to the control unit stemming from:
- the temperature and/or velocity of the gas inside the conditioner,
- the surface temperature of the meat, and/or
- the amount and/or type of meat present inside the conditioner.

In this embodiment the fan and the gas temperature is regulated such that the inventive treatment as described above is achieved by providing input to the control unit from the temperature readings either from the meat or the gas itself or a combination thereof or from knowledge, typically empirical knowledge, about the amount or type of meat being treated inside the conditioner. In this manner the conditioning of the meat may be programmed and carried out with only a limited amount of input which is easy to detect. In a still further advantageous embodiment a control unit comprises a pre-programmed set of parameters within which the gas temperature, gas velocity, meat surface temperature, and/or conveyor speed shall be regulated, and where the time from where the meat enters the conditioner at said first temperature until the meat leaves the conditioner at said second temperature is constant. In this manner by running the conveyor at a substantially constant speed such that the amount of time which the meat spends inside the conditioner will be more or less constant the conditioning process is suitable to be part of a continuous production cycle in that the capacity of the conditioner is not variable but more or less constant.

In a variation of this embodiment the invention in a further embodiment foresees that the control unit comprises a pre-programmed set of parameters within which the gas temperature and/or gas velocity, shall be regulated relative to the amount of meat present inside the conditioner, and where the conveyor speed is adjusted such that the meat leaves the conditioner at said second temperature.

In this manner the output of the conditioner is not constant, but will vary due to the varying speed of the conveyor. However, the parameters for controlling the gas temperature and thereby the environment inside the conditioner is kept constant which may be advantageous from an economic point of view in that a constant environment inside the conditioner is easier to maintain and control and thereby will save overall costs.

In a still further advantageous embodiment the meat, after having been processed at said second temperature is returned to a freezer, and re-frozen to said first temperature, i.e. "re-freezing" meaning that the frozen meat at said second temperature is subjected to a freezing effect, whereby the temperature is lowered to the first temperature again. As the meat is not fully thawed, the step of re-freezing the meat is not considered as the meat having been frozen twice, but will be considered as the same freezing cycle and therefore will not have a detrimental effect neither to the quality of the meat nor to the storage capability of the meat.

In a still further advantageous embodiment of the invention the second temperature is between -5 °C and -2.5 °C, depending on the type of meat which again has influence on the salinity of the liquid/juice in the meat, the lower second temperature is advantageous in that in this temperature range it is ensured that for all types of meat, i.e. for all types of meat liquids/juices the liquid will not be able to make the phase transfer from frozen state to liquid state and thereby has to pass the threshold, which as already described above is very energy consuming, of going from ice to liquid state which could dramatically slow down the process as already explained in the introductory portion of this description.

In a still further advantageous embodiment of the invention a piece of meat is provided with a unique identifier, e.g. for optical recognition, for electronic recognition or for any other suitable recognition, and that means for recognising said unique identifier is provided at one or more positions selected from the group comprising the entrance to the conditioner, at least one place inside the conditioner and at the exit of said conditioner, and where the means for recognising the unique identifier communicates with a central control unit which collects conditioner data and/or meat data relating to temperature and/or time in the conditioner and stores these data relating to the piece of meat having the unique identifier.

Advantageously, each piece of meat entering the conditioner may be provided with a unique identifier. Further, the temperature in the conditioner and optionally from the at least one embedded temperature sensor in the at least one piece of meat may be collected and stored, e.g. by storage means provided in said central control unit. Thus, the storage means provided in the central control unit may be configured for storing data relating to each piece of meat with respect to time and, temperature in the conditioner, such that the collected data is related to a unique piece of meat and may be used for tracing and documenting the treatment of each piece of meat supplied with a unique identifier.

Alternatively the meat is indexed as it enters the conditioner. By counting the meat pieces entering and leaving the conditioner, it is possible to relate any data to the exact piece of meat, as all the pieces of meat enters and leaves in the same sequence.

By correlating the specific piece of meat with the conditions to which it is disposed, it is possible to document the exact treatment of that particular piece of meat such that the traceability through the process is complete whereby quality is not only a stamp but is a proven fact due to the collection of data being assembled for the specific pieces of meat during the entire process.

By furthermore dividing the unique identifier as the piece of meat after having left the conditioner is divided, for example in the further treatment process, each piece of meat even after having been formed or cut, is traceable and it may be documented which treatment it has undergone since it arrived at the treatment facility.

The invention is also directed at an apparatus for conditioning of meat where said apparatus comprises:
- an infeed facility,
- a conditioner with a conveyor arranged inside the conditioner,
- a conditioned meat collector, and
- a transport device for moving processed meat, e.g. portioned, sliced, formed and/or cut meat, onto further processing,
wherein
- said infeed facility is configured for feeding frozen meat having a first temperature between -35 and -18 °C into said conditioner,
- said conditioner is configured for conveying the meat by said conveyor arranged inside the conditioner and for circulating gas inside the conditioner to expose the meat to the circulating gas for raising the temperature in the meat to a second temperature between -8 and -1.5 °C, more preferred -5 and - 1.5 °C,
- said conditioned meat collector is configured for moving the conditioned meat from the conditioner to a processing device for processing at said second temperature, and wherein
- said transport device for moving processed meat is configured for moving said processed meat onto further processing at a third temperature different from said second temperature.

This apparatus is naturally providing all the advantages derivable from the inventive method as described above. Further embodiments of the apparatus are also disclosed.

According to one embodiment, the conveying of the meat by said conveyor may be adapted to characteristics of the meat.

Further, said characteristics of the meat may be selected from one or more of the following:
the weight of the meat, or
the width of the meat, or
the height of the meat, or
the geometrical shape of the meat, or
the type of the meat.

According to one embodiment, the conditioner may comprise means for controlling the temperature and/or velocity of the circulating gas.

According to a further embodiment, the means for controlling the temperature of the circulating gas may comprise a temperature sensor, gas conditioning means and a control unit for controlling the gas conditioning means.

According to a further advantageous embodiment, the means for controlling the temperature of the circulating gas may comprise a pre-programmed temperature change routine.

According to further embodiments, means of the conditioner for exposing the meat to the circulating gas may be at least one of a spiral conveyor, a single or double conveyor or a plurality of racks and trays for holding the meat. Thus, it is also possible to configure the conditioner conveyor as a linear conveyor, as a paternoster arrangement, etc. Even further, it is apparent that the conditioner conveyor may be assembled of two or more conveyors, e.g. conveyor belts, in the transport direction as well as in the lateral direction, for example with two or more conveyor belts conveying pieces of meat in parallel. A further advantage can here be achieved in that the different parallel conveyors can be regulated to be driven at different speeds, for example when meat pieces having a first set of characteristics are located on one conveyor and meat pieces having a second set of characteristics (different from the first set) are located on another of the parallel conveyors, whereby both types of pieces of meat are conditioned in an optimal manner, when they are delivered from the conditioner.

Advantageously, the processing device for processing meat at said second temperature may be a device where the meat is portioned, sliced, formed and/or cut.

According to one embodiment, the transport device for moving processed meat may be configured for moving said processed meat to a freezing facility or to further processing. Thus, after having been treated the meat may be brought back either to the deep freezing temperature in the range of -35 to - 18 °C for storage or may e.g. be thawed and brought into a cooler or the like for retail sales.

According to an advantageous embodiment, the apparatus may comprise a control unit having a computer system operably connected to at least said conditioner for adjusting or controlling one or more of
- the circulating gas velocity, or
- the circulating gas temperature or
- the conditioner conveyor speed,
based on input relating to one or more of the amount of meat in the conditioner, the type of meat in the conditioner, the surface temperature of the meat, an inside temperature of at least one piece of meat, the temperature of the circulating gas or the velocity of the circulating gas, whereby the temperature of the meat has reached said second temperature when leaving the conditioner.

In connection with certain types of meat and specific food products in general, a second temperature range having an upper temperature higher than -1.5 °C may be used, for example -1.0 °C, -0.5 °C or even -0 °C (commonly referred to as "minus zero", i.e. the state wherein water is still frozen but at a temperature of -0 °C). Such a higher upper temperature may be used in connection with specific food matter, food items, etc, which are still in a frozen state at such a temperature. It will be understood that such a second temperature range, e.g. between -8/-5/-4 °C and -1.0/-0.5/-0 °C, may also be used in connection with the methods, apparatus and/or means as described in this description and in the manner as described.

### Description of the Drawing

The invention will now be described in more detail with reference to the drawings in which
- Figure 1: illustrates a layout of an apparatus according to the present invention,
- Figure 2: illustrates a conditioner with a spiral conveyor, seen from one side,
- Figure 3: illustrates a conditioner with a spiral conveyor, seen from another side,
- Figure 4: illustrates an embodiment of a conditioner in a perspective view, and
- Figure 5: illustrates the embodiment shown in Figure 4 in a further perspective view.

### Detailed Description of the Invention

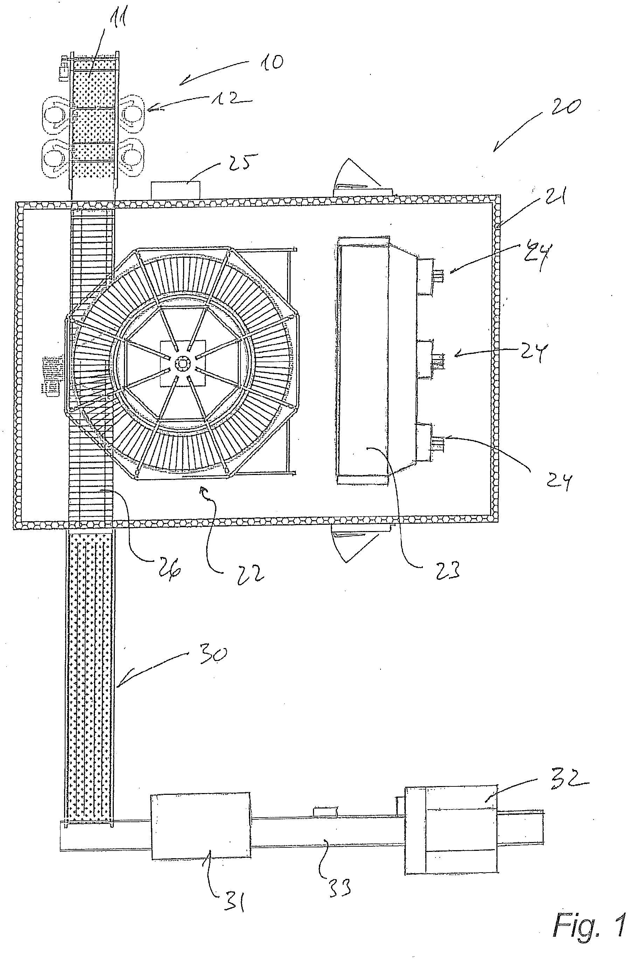

In figure 1 is illustrated a layout of an apparatus according to the present invention.

The apparatus comprises an infeed station 10 which in this embodiment comprises a lead-in or infeed conveyor 11 on which conveyor workers 12 will place frozen meat items to be treated in the conditioner. The infeed station 10 may also be an automatic station such that the frozen meat is collected directly from a freezer, for example by means of a robot, and placed on the infeed conveyor 11 in order to enter the conditioner.

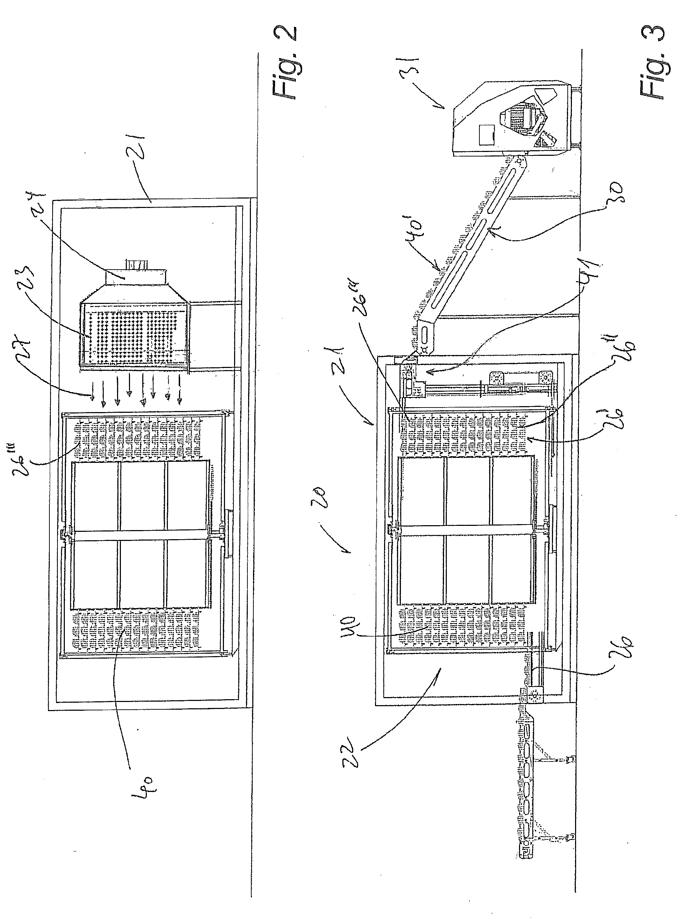

The conditioner 20 comprises an insulated housing 21. Inside the conditioner a spiral conveyor 22 is arranged such that meat items being placed on the infeed conveyor 11 will be transferred to the spiral conveyor 22 and travel up the spiral conveyor as will be explained with reference to figures 2 and 3. Adjacent the spiral conveyor 22 is a gas conditioning means 23 and a plurality of fans 24 arranged such that a gas circulating inside the insulated housing 21 will blow across meat items placed on the spiral conveyor 22 and due to the gas conditioning means 23 have the correct temperature in accordance with the desired conditioning cycle. A control unit 25 is provided in order to monitor the temperature of the meat items, the gas inside the insulated housing 21, the temperature in the gas conditioning means 23, the speed of the fans 24 and the velocity of the conveyor belt 26 constituting the spiral conveyor 22. After the meat items have travelled through the spiral conveyor on the conveyor means 26, the meat items will be deposited on a declining conveyor 30 which will transport the conditioned meat items to a processing device such as for example a pressing machine 31 which will form the conditioned products into desired shapes and dimensions after which the products will by means of a further conveyor 33 be transferred to a processing device such as for example a portioning machine 32 where the shaped, conditioned products will be cut, sliced or exposed to any other desired treatment in order to finish the meat products as desired.

The meat products placed on the in feed conveyor 11 will typically have a temperature between -35 and -18 °C. As they enter the conditioner 20 the temperature in the meat items will be raised such that as the meat items arrive on the declining conveyor 30, the meat temperature, both surface and core temperature, will typically be in the range of -5 to -1.5 °C depending on the type of meat and the type of treatment which it will be exposed to after leaving the conditioner.

As already explained above the heat transfer coefficient is approx. 4 times higher in ice than in liquid which provides for a relatively fast increase in temperature from the temperature range -35 to -18 °C at which the meat items enter the conditioner to the temperature range of -5 to -1.5 °C at which the meat items are transferred to the declining conveyor.

According to further embodiments, the second temperature may be in the range between -4 °C and -2 °C or between -5 °C and -2.5 °C.

The temperatures referred to may be the equalized core temperature, a core temperature or a surface temperature.

Furthermore, by providing a spiral conveyor as is evident from figure 2 and 3 it is possible to provide many meters of conveyor surface 26 in that in the spiral conveyor 22 the conveyor surfaces 26 are superposed as indicated by the conveyor 26', 26" whereby as in this embodiment 15 layers of superposed conveyor levels 26', 26" etc. are stacked on top of each other inside the spiral conveyor 22 providing a very large surface such that the meat products indicated by 40 all are present inside the housing 21 and exposed to the gas 27 being ejected from the gas conditioning unit 23 and by the fans 24. In this manner the gas 27 will circulate inside the housing 21 and thereby blow across the meat items 40 in a very efficient manner such that the energy consumption by the installation and in particular by the gas conditioner 23 and the fans 24 is at an optimum relative to the heat exchange properties of the meat items 40 with the gas 27. After having reached the top level 26'" the meat items 40 will leave the spiral conveyor by a special take-out unit 41. According to a particular embodiment, a take-out unit may be able to take out meat items from any level on the spiral conveyor 22, but in the illustrated embodiment the take-out unit 41 is configured for taking out meat items from the top level on the spiral conveyor 22.

Thus, it is apparent that various embodiments of take-out units may be used. However take-out units or discharge facilities, transferring the conditioned meat from the end of the spiral conveyor, i.e. the uppermost level provides for a simpler installation, and is also used with the present invention.

Typically, however, in order to utilize the capacity of the conditioner 20 to its maximum, the take-out unit 41 will take out meat items from the top level 26'" and transfer them to a downwards inclined conveyor 30. The meat items 40' on the declining conveyor 30 will be in the conditioned state, e.g. have a temperature in the range of -5 to -1.5 °C at which temperature they are transferred to a product pressing or forming unit 31 or any other processing equipment.

If for some reason the production in the pressing and forming machine 31 and/or the other processing in machines 32 is cancelled or delayed (or if the meat products have been feed into the conditioner earlier than necessary), it is possible to maintain the meat items 40 inside the spiral conveyor 21 for a longer period of time, and for example lower the temperature inside the housing 21 in that the meat items due to the conditioning cycle's temperatures are constantly maintained in the frozen state throughout the process and as such lowering the temperature inside the housing 21 of the conditioner 20 will not be detrimental to the meat items as such, but will only be variations in the freezing temperature.

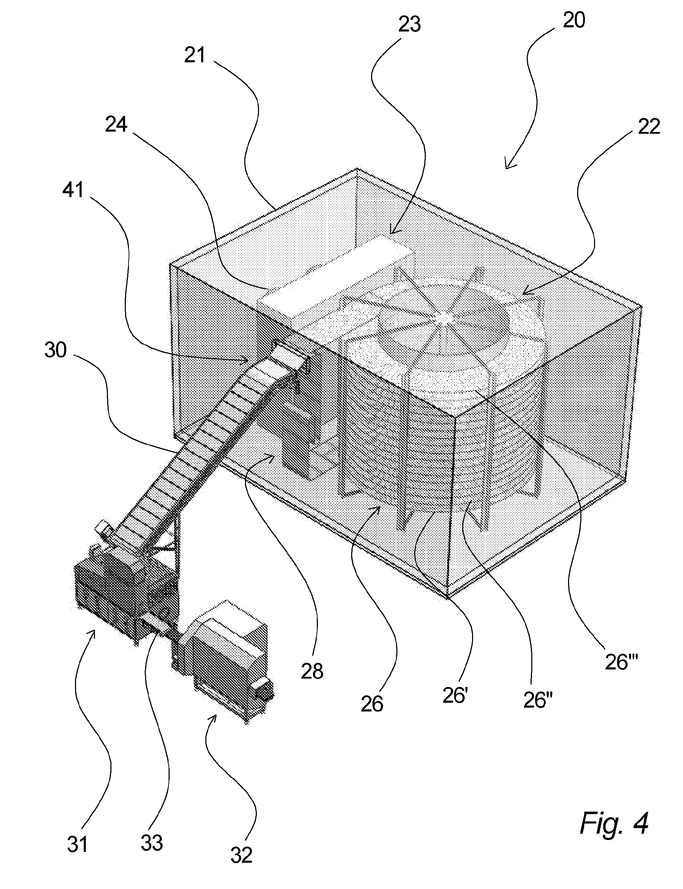

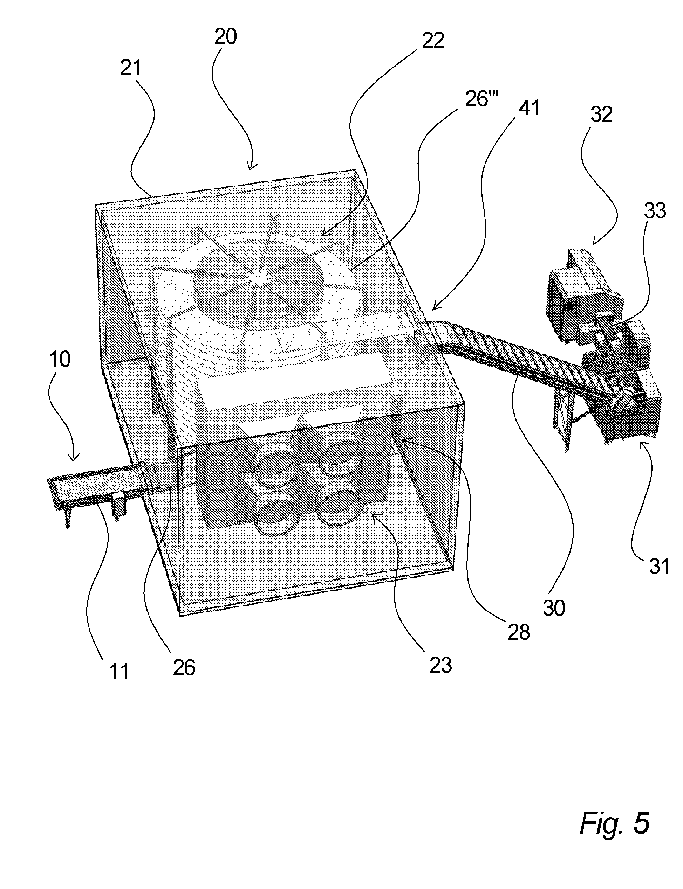

In Figures 4 and 5 a conditioner 20 according to an embodiment of the invention is shown in perspective views from different points of view, wherein essential features and elements are illustrated. Thus, the insulated housing 21 is shown, wherein the conditioner conveyor 22 and the gas conditioning means 23 are located. As shown, the conditioner conveyor 22 is in this embodiment a spiral conveyor with a conveyor belt 26, arranged in superposed levels, e.g. a lower level 26' followed by the level 26", etc. and ending with a top level 26'" as shown in Figure 4.

As shown in Figure 5, an infeed station 10 with an infeed conveyor 11 is located at one side of the conditioner 20, leading to the conveyor belt 26. The conveyor belt 26 may be arranged in an endless arrangement as illustrated in Figures 4 and 5, where it is illustrated that the conveyor belt 26 from the top level 26'" passes the take-out unit 41 and moves downward to back to the infeed end, e.g. to the infeed station 10. On the way from the top level 26'" and to the infeed end a take-up unit 28 is arranged for e.g. taking up slack in the conveyor belt 26, compensate for length variations, etc.

It will be understood that at the infeed end, e.g. at the infeed station 10, the pieces of meat, which have not been illustrated in Figures 4 and 5, may be introduced directly on the conveyor belt 26 and/or that other means than an infeed conveyor 11 may be used at the infeed station 10.

Furthermore, in Figures 4 and 5 the conditioner conveyor 21 has been illustrated as a spiral conveyor, but other manners of arranging the conditioner conveyor 21 are possible, for example as a linear conveyor, as a paternoster arrangement, etc., Further, it is apparent that the conditioner conveyor 21 can be assembled of two or more conveyors, e.g. conveyor belts, in the transport direction as well as in the lateral direction, for example with two or more conveyor belts conveying pieces of meat in parallel. This last embodiment further has the advantage that the different parallel conveyors can be regulated to be driven at different speeds, for example when meat pieces having a first set of characteristics are located on one conveyor and meat pieces having a second set of characteristics (different from the first set) are located on another of the parallel conveyors, whereby both types of pieces of meat are conditioned in an optimal manner, when they reach the take-out unit 41.

Even further, it is understood that two or more conditioner conveyors 22 may be arranged, with pieces of meat leaving one conditioner conveyor 22 being fed to the next, which may be advantageous in certain circumstances.

In Figures 4 and 5 the gas conditioning means 23 are also illustrated in a schematically manner, where in Figure 5 the inlet openings for the fans 24 (not shown here) are illustrated.

Further, in Figures 4 and 5 it is shown that the take-out unit 41 facilitates delivery of the pieces of meat (not shown in Figures 4 and 5) through an opening in the insulated housing 21 to the declining conveyor 30, which feeds the pieces of meat to processing performed at the second temperature. As shown, this may be a pressing machine 31 for forming the pieces of meat, followed by a further conveyor 33 leading the pieces of meat to a processing apparatus such as a portioning machine 32.

After the processing the pieces of meat may as described above be transported to a freezing facility for bringing the temperature of the still frozen pieces of meat to a lower temperature, e.g. said first temperature range, for storage, or the pieces of meat may be brought to a facility at a higher temperature, e.g. storage temperature, chilled storage, for retail sale, etc., possibly after being packaged, labelled, etc. Other manners and methods of handling the pieces of meat after conditioning and processing at the second temperature are possibly, which will be apparent to a skilled person.

### Example

An example of the effect achieved by an embodiment of the invention will be described in the following with reference to tests that have been performed as compared to a traditionally used method for processing of meat.

In this example the weight loss of meat and pork loins has been tested using a conditioning method according to an embodiment of the invention, wherein a spiral conditioner is used before processing of meat, as compared to a traditional method, where the meat is thawed before processing and re-frozen using a tunnel freezer. In these tests two batches of loins are used, where three frozen meat loins NM1-NM3 and three frozen pork loins NP1-NP3 are acquired and cut in half before the tests, thus resulting in one batch, Batch 1, comprising three half meat loins NM1a-NM3a and three half pork loins NP1a-NP3a, and another batch, Batch 2, comprising three half meat loins NM1b-NM3b and three half pork loins NP1b-NP3b. As it will be apparent, these batches correspond to each other as regards weight and other characteristics of the individual items two and two.

In order to simulate the circumstances relating to a processing according to an embodiment of the invention as compared to a traditional processing, Batch 1 has been subjected to a conditioning test (Test A) and Batch 2 has been subjected to a thawing process followed by a crust freezing test (Test B) and the weight changes have been measured and registered.

In Test A the following steps have been performed.
1. Weight measurement of Batch 1: NM1a NM2a, NM3a, NP1a, NP2a and NP3a, after they have been taken out from freezer and before entering spiral conditioner.
2. Core temperature at -18° C from freezer.
3. Conditioning of Batch 1 commences in spiral conditioner until core temperature reaches app. -2° C.
4. Take weight measurement of Batch 1 after conditioning.
5. Slice each loin, package in insulated packaging and forward to laboratory test of moisture and shell-life test.

As it will be understood from the previous description, a processing, e.g. cutting, slicing, forming, etc. would in accordance with the invention take place after step 3, i.e. with the loins having a core temperature at app. -2° C.

In Test B the following steps have been performed.
1. Weight measurement of Batch 2: NM1b, NM2b, NM3b, NP1b, NP2b and NP3b, after they have been taken out from freezer and before thawing.
2. Thawing of Batch 2 until core temperature reaches app. +2° C.
3. Take weight measurement before sending to tunnel freezer for crust freezing.
4. Crust freeze Batch 2 for 8 minutes at -35° C air temperature in tunnel freezer.
5. Take weight measurement for each loin of Batch 2 after taking from tunnel freezer.
6. Slice each loin, package in insulated packaging and forward to laboratory test of moisture and shell-life test.

As it will be understood from the previous description, a processing, e.g. cutting, slicing, forming, etc. would take place after step 2, i.e. with the loins having a core temperature at app. +2° C.

The weight results for Test A (Batch 1) are shown in Table 1 below. As it can be seen, a weight loss has been avoided for all six test samples and in fact a total or average weight gain has been achieved of 1.22% for the meat loins and of 1.47% for the pork loins. This weight gain is caused by the loins absorbing moisture from the air during conditioning.

**Table 1**

| **MEAT** | **NM1a** | **NM2a** | **NM3a** | **Total** | **Average** |
|---|---|---|---|---|---|
| Before conditioning Weight, grams | 3669 | 2496 | 2964 | 9129 | 3043 |
| After conditioning Weight, grams | 3714 | 2523 | 3004 | 9241 | 3080 |
| Weight difference, grams | +45 | +27 | +40 | +112 | +37 |
| **Weight difference, percentage** | +**1**.**23%** | +**1**.**08%** | +**1**.**35%** | +**1**.**22** | +**1**.**22** |

| **PORK** | **NP1a** | **NP2a** | **NP3a** | **Total** | **Average** |
|---|---|---|---|---|---|
| Before conditioning Weight, grams | 1759 | 1564 | 1700 | 5023 | 1674 |
| After conditioning Weight, grams | 1786 | 1583 | 1728 | 5097 | 1699 |
| Weight difference, grams | +27 | +19 | +28 | +74 | +25 |
| **Weight difference, percentage** | +**1**.**53%** | +**1**.**21%** | +**1**.**65%** | +**1**.**47%** | +**1**.**47%** |

The weight results for Test B (Batch 2) are shown in Table 2 below for meat loins and in Table 3 below for pork loins. As it can be seen, a weight loss is registered for all test samples (apart from NM3b, where a slight weight increase is registered for the thawing process), resulting in a total or average weight loss of 2.55% for the meat loins and of 5.20% for the pork loins.

**Table 2**

| **MEAT** | **NM1b** | **NM2b** | **NM3b** | **Total** | **Average** |
|---|---|---|---|---|---|
| Before thawing Weight, grams | 4545 | 2909 | 2870 | 10324 | 3441 |
| After thawing Weight, grams | 4429 | 2822 | 2885 | 10136 | 3379 |
| Weight difference, thawing, grams | -116 | -87 | +15 | -188 | -63 |
| Weight difference, thawing, percentage | -2.55% | -2.99% | +0.52% | -1.82% | -1.82% |
| After crust freezing Weight, grams | 4398 | 2797 | 2866 | 10061 | 3354 |
| Weight difference, freezing, grams | -31 | -25 | -19 | -75 | -25 |
| Weight difference, freezing, percentage | -0.70% | -0.89% | -2.15% | -0.74% | -0.74% |
| Total weight difference, grams | -147 | -112 | -4 | -263 | -88 |
| **Total weight difference, percentage** | -**3**.**23%** | -**3**.**85%** | -**0**.**46%** | -**2**.**55%** | -**2**.**55%** |

**Table 3**

| **PORK** | **NP1b** | **NP2b** | **NP3b** | **Total** | **Average** |
|---|---|---|---|---|---|
| Before thawing Weight, grams | 1662 | 1422 | 1835 | 4919 | 1640 |
| After thawing Weight, grams | 1621 | 1372 | 1727 | 4720 | 1573 |
| Weight difference, grams | -41 | -50 | -108 | -199 | -66 |
| Weight difference, percentage | -2.47% | -3.52% | -5.89% | -4.05% | -4.05% |
| After crust freezing Weight, grams | 1603 | 1355 | 1705 | 4663 | 1554 |
| Weight difference, freezing, grams | -18 | -17 | -22 | -57 | -19 |
| Weight difference, freezing, percentage | -1.11% | -1.24% | -1.27% | -1.21% | -1.21% |
| Total weight difference, grams | -59 | -67 | -130 | -256 | -85 |
| **Total weight difference, percentage** | **-3.55 %** | -**4**.**71%** | -**7**.**08%** | -**5**.**20%** | -**5**.**20%** |

Based on these weight test results it will be apparent that by the invention it is achieved that the disadvantages mentioned initially in the description, e.g. loss of moisture or liquid in the meat during the thawing process, loss of weight, etc. can be avoided, while still being able to process, e.g. cut, slice, etc. the meat easily in the conditioned state, e.g. at a core temperature between -8 and -1.5 °C, between -5 and - 1.5 °C or at app. -2° C as shown by Test A above.

Furthermore, as mentioned above, the sliced loins were tested as regards shell-life, in connection with which the bacteria growth (aerobic plate counts) were examined, with counts being made for the test samples at day 3, day 5 and day 7. Also these tests support that advantages are achieved by the invention in relation to conventional methods as it appears that there is an advantage in terms of achieving lower microbial counts on the meat.

## Claims

1. A method of conditioning meat such that the further processing is optimized, wherein the meat having a first temperature between -35 and -18 °C is introduced into a conditioner inside which conditioner a gas is circulated, by means of said gas the temperature is raised in the meat to a second temperature between -8 and -1.5 °C, more preferred -5 and -1.5 °C, with the meat being conveyed by a conveyor arranged inside the conditioner, at which said second temperature the still frozen meat is transported out of the conditioner, where said meat is processed at said second temperature, after which the processed meat is brought to a third temperature different from said second temperature.

2. Method according to claim 1 **characterised in that** means are provided for registering the temperature of at least one piece of meat inside the conditioner, where the temperature of said at least one piece of meat is used as input to a pre-programmed control unit, which unit controls the temperature inside the conditioner.

3. Method according to claim 2 **characterised in that** the means for registering the temperature of at least one piece of meat inside the conditioner comprises means for registering the surface temperature of the meat, and/or an embedded temperature sensor in the at least one piece of meat for registering the core temperature of said at least one piece of meat.

4. Method according to claim 1, 2 or 3 **characterised in that** the speed of said conveyor arranged inside the conditioner is regulated by input supplied to a control unit, where said input stems from:
- the temperature and/or velocity of the gas,
- the temperature of the meat and/or
- the amount and/or type of meat present inside the conditioner.

5. Method according to claim 1 or 2 **characterised in that** gas conditioning means and at least one fan is arranged inside the conditioner, where a control unit regulates the speed of the at least one fan and thereby the gas velocity and/or the temperature to which the gas conditioning means treats the gas, by input to the control unit stemming from:
- the temperature and/or velocity of the gas inside the conditioner,
- the surface temperature of the meat and/or,
- the amount and/or type of meat present inside the conditioner.

6. Method according to claim 4 or 5 where the control unit comprises a pre-programmed set of parameters within which the gas temperature, gas velocity, meat surface temperature, and/or conveyor speed shall be regulated, and where the time from meat enters the conditioner at said first temperature until the meat leaves the conditioner at said second temperature is constant.

7. Method according to claim 4 or 5 where the control unit comprises a pre-programmed set of parameters within which the gas temperature and/or gas velocity, shall be regulated relative to the amount of meat present inside the conditioner, and where the conveyor speed is adjusted such that the meat leaves the conditioner at said second temperature.

8. Method according to any of claims 1 to 7 wherein the meat after having been processed, e.g. formed, pressed, portioned, sliced and/or cut at said second temperature is returned to a freezer, and in said freezer frozen to said first temperature.

9. Method according to any of claims 1 to 8 wherein the second temperature is between -5 °C and -2.5 °C.

10. Method according to any of claims 1 to 9, wherein a piece of meat is provided with a unique identifier, e.g. for optical recognition or for electronic recognition, and that means for recognising said unique identifier is provided at one or more positions selected from the group comprising the entrance to the conditioner, at least one place inside the conditioner and at the exit of said conditioner, and where the means for recognising the unique identifier communicates with a central control unit, which collects conditioner data and/or meat data relating to temperature and/or time in the conditioner and stores these data relating to the piece of meat having the unique identifier.

11. Method according to claim 10 wherein the unique identifier during the further processing of the piece of meat is copied, such that the copies of the identifier follow the meat portions created during and after the further processing.

12. Method according to any of the claims 1-11, wherein the conveying by said conveyor is adapted to characteristics of the meat.

13. Method according to claim 12, wherein the characteristics of the meat is selected from one or more of the following:
the weight of the meat, or
the width of the meat, or
the height of the meat, or
the geometrical shape of the meat, or
the type of the meat.

14. Apparatus for conditioning of meat where said apparatus comprises:
- an infeed facility,
- a conditioner with a conveyor arranged inside the conditioner,
- a conditioned meat collector, and
- a transport device for moving processed meat onto further processing,
wherein
- said infeed facility is configured for feeding frozen meat having a first temperature between -35 and -18 °C into said conditioner,
- said conditioner is configured for conveying the meat by said conveyor arranged inside the conditioner and for circulating gas inside the conditioner to expose the meat to the circulating gas for raising the temperature in the meat to a second temperature between -8 and -1.5 °C, more preferred -5 and - 1.5 °C,
- said conditioned meat collector is configured for moving the conditioned meat from the conditioner to a processing device for processing at said second temperature, and wherein
- said transport device for moving processed meat is configured for moving said processed meat onto further processing at a third temperature different from said second temperature.

15. Apparatus according to claim 14, wherein the conveying of the meat by said conveyor is adapted to characteristics of the meat.

16. Apparatus according to claim 15, wherein the characteristics of the meat is selected from one or more of the following:
the weight of the meat, or
the width of the meat, or
the height of the meat, or
the geometrical shape of the meat, or
the type of the meat.

17. Apparatus according to claim 14, 15 or 16, wherein said conditioner comprises means for controlling the temperature and/or velocity of the circulating gas.

18. Apparatus according to claim 17 wherein the means for controlling the temperature of the circulating gas comprises a temperature sensor, gas conditioning means and a control unit for controlling the gas conditioning means.

19. Apparatus according to claim 17 or 18, wherein the means for controlling the temperature of the circulating gas comprises a pre-programmed temperature change routine.

20. Apparatus according to any of claims 14 to 19, wherein means of the conditioner for exposing the meat to the circulating gas is at least one of a spiral conveyor, a single or double conveyor or a plurality of racks and trays for holding the meat.

21. Apparatus according to any of claims 14 to 20, wherein said processing device for processing meat at said second temperature is a device where the meat is portioned, sliced, formed and/or cut.

22. Apparatus according to any of claims 14 to 21, wherein said transport device for moving processed meat is configured for moving said processed meat to a freezing facility or to further processing.

23. Apparatus according to any of claims 14 to 22, comprising a control unit having a computer system operably connected to at least said conditioner for adjusting or controlling one or more of
- the circulating gas velocity, or
- the circulating gas temperature or
- the conditioner conveyor speed,
based on input relating to one or more of the amount of meat in the conditioner, the type of meat in the conditioner, the surface temperature of the meat, an inside temperature of at least one piece of meat, the temperature of the circulating gas or the velocity of the circulating gas, whereby the temperature of the meat has reached said second temperature when leaving the conditioner.

## Patentansprüche

1. Verfahren zum Konditionieren von Fleisch, so dass die weitere Verarbeitung optimiert wird, wobei das Fleisch, welches eine erste Temperatur zwischen -35 und -18°C aufweist, in eine Konditioniereinrichtung eingeführt wird, innerhalb von welcher Konditioniereinrichtung ein Gas zirkuliert wird, mittels des Gases die Temperatur in dem Fleisch auf eine zweite Temperatur zwischen -8 und -1,5°C, mehr bevorzugt -5 und -1,5°C erhöht wird, wobei das Fleisch durch eine innerhalb der Konditioniereinrichtung angeordnete Beförderungseinrichtung befördert wird, bei welcher zweiten Temperatur das noch gefrorene Fleisch aus der Konditioniereinrichtung hinaus transportiert wird, wobei das Fleisch bei der zweiten Temperatur verarbeitet wird, wonach das verarbeitete Fleisch auf eine dritte Temperatur, die von der zweiten Temperatur verschieden ist, gebracht wird.

2. Verfahren nach Anspruch 1, **dadurch gekennzeichnet, dass** Mittel vorgesehen werden zum Registrieren der Temperatur von mindestens einem Stück Fleisch innerhalb der Konditioniereinrichtung, wobei die Temperatur des mindestens einen Stücks Fleisch als eine Eingabe in eine vorprogrammierte Steuerungseinheit, welche Einheit die Temperatur innerhalb der Konditioniereinrichtung steuert, verwendet wird.

3. Verfahren nach Anspruch 2, **dadurch gekennzeichnet, dass** das Mittel zum Registrieren der Temperatur von mindestens einem Stück Fleisch innerhalb der Konditioniereinrichtung Mittel zum Registrieren der Oberflächentemperatur des Fleischs und/oder einen eingebetteten Temperaturfühler in dem mindestens einen Stück Fleisch zum Registrieren der Kerntemperatur des mindestens einen Stücks Fleisch umfasst.

4. Verfahren nach Anspruch 1, 2 oder 3, **dadurch gekennzeichnet, dass** die Geschwindigkeit der innerhalb der Konditioniereinrichtung angeordneten Beförderungseinrichtung durch eine Eingabe, die einer Steuerungseinheit zugeführt wird, reguliert wird, wobei die Eingabe von:
- der Temperatur und/oder Geschwindigkeit des Gases,
- der Temperatur des Fleischs und/oder
- der Menge und/oder Art von Fleisch, das innerhalb der Konditioniereinrichtung vorhanden ist,
herrührt.

5. Verfahren nach Anspruch 1 oder 2, **dadurch gekennzeichnet, dass** Gaskonditionierungsmittel und mindestens ein Gebläse innerhalb der Konditioniereinrichtung angeordnet sind, wobei eine Steuerungseinheit die Geschwindigkeit des mindestens einen Gebläses und dadurch die Gasgeschwindigkeit und/oder die Temperatur, bis zu welcher das Gaskonditionierungsmittel das Gas behandelt, reguliert durch Eingabe(n) in die Steuerungseinheit, welche von
- der Temperatur und/oder Geschwindigkeit des Gases innerhalb der Konditioniereinrichtung,
- der Oberflächentemperatur des Fleischs und/oder
- der Menge und/oder Art von Fleisch, das innerhalb der Konditioniereinrichtung vorhanden ist,
herrührt bzw. herrühren.

6. Verfahren nach Anspruch 4 oder 5, wobei die Steuerungseinheit einen vorprogrammierten Satz von Parametern, innerhalb von welchen die Gastemperatur, Gasgeschwindigkeit, Fleischoberflächentemperatur und/oder die Beförderungseinrichtungsgeschwindigkeit reguliert werden sollen, umfasst und wobei die Zeit, von welcher Fleisch in die Konditioniereinrichtung bei der ersten Temperatur eintritt, bis das Fleisch die Konditioniereinrichtung bei der zweiten Temperatur verlässt, konstant ist.

7. Verfahren nach Anspruch 4 oder 5, wobei die Steuerungseinheit einen vorprogrammierten Satz von Parametern, innerhalb von welchen die Gastemperatur und/oder Gasgeschwindigkeit bezogen auf die Menge von innerhalb der Konditioniereinrichtung vorhandenem Fleisch reguliert werden sollen, umfasst und wobei die Beförderungseinrichtungsgeschwindigkeit so angepasst wird, dass das Fleisch die Konditioniereinrichtung bei der zweiten Temperatur verlässt.

8. Verfahren nach einem der Ansprüche 1 bis 7, wobei das Fleisch, nachdem es bei der zweiten Temperatur verarbeitet, z.B. geformt, gepresst, portioniert, in Scheiben geschnitten und/oder zerschnitten worden ist, in ein Gefriergerät zurückgeführt wird und in dem Gefriergerät auf die erste Temperatur eingefroren wird.

9. Verfahren nach einem der Ansprüche 1 bis 8, wobei die zweite Temperatur zwischen -5°C und -2,5°C liegt.

10. Verfahren nach einem der Ansprüche 1 bis 9, wobei ein Stück Fleisch mit einem einzigartigen Identifikator versehen wird, z.B. zur optischen Erkennung oder zur elektronischen Erkennung, und dass Mittel zum Erkennen des einzigartigen Identifikators an einer oder mehreren Positionen, ausgewählt aus der Gruppe umfassend den Eingang zu der Konditioniereinrichtung, mindestens eine Stelle innerhalb der Konditioniereinrichtung und am Ausgang der Konditioniereinrichtung, bereitgestellt werden und wobei das Mittel zum Erkennen des einzigartigen Identifikators mit einer zentralen Steuerungseinheit kommuniziert, welche Konditioniereinrichtungsdaten und/oder Fleischdaten in Bezug auf Temperatur und/oder Zeit in der Konditioniereinrichtung sammelt und diese Daten in Bezug auf das Stück Fleisch, welches den einzigartigen Identifikator aufweist, speichert.

11. Verfahren nach Anspruch 10, wobei der einzigartige Identifikator während der weiteren Verarbeitung des Stücks Fleisch kopiert wird, so dass die Kopien des Identifikators den während und nach der weiteren Verarbeitung erzeugten Fleischabschnitten folgen.

12. Verfahren nach einem der Ansprüche 1-11, wobei das Befördern durch die Beförderungseinrichtung an Merkmale des Fleischs angepasst ist.

13. Verfahren nach Anspruch 12, wobei die Merkmale des Fleischs ausgewählt sind aus einem oder mehreren der Folgenden:
dem Gewicht des Fleischs oder
der Breite des Fleischs oder
der Höhe des Fleischs oder
der geometrischen Gestalt des Fleischs oder
der Art des Fleischs.

14. Vorrichtung zum Konditionieren von Fleisch, wobei die Vorrichtung umfasst:
- eine Einschleusungseinrichtung,
- eine Konditioniereinrichtung mit einer Beförderungseinrichtung, die innerhalb der Konditioniereinrichtung angeordnet ist,
- eine Sammelvorrichtung für konditioniertes Fleisch und
- eine Transportvorrichtung zum Bewegen von verarbeitetem Fleisch zu einer weiteren Verarbeitung,
wobei
- die Einschleusungseinrichtung konfiguriert ist für ein Einschleusen von gefrorenem Fleisch mit einer ersten Temperatur zwischen -35 und -18°C in die Konditioniereinrichtung,
- die Konditioniereinrichtung konfiguriert ist zum Befördern des Fleischs durch die innerhalb der Konditioniereinrichtung angeordnete Beförderungseinrichtung und zum Zirkulieren von Gas innerhalb der Konditioniereinrichtung, um das Fleisch dem zirkulierenden Gas zum Erhöhen der Temperatur in dem Fleisch auf eine zweite Temperatur zwischen -8 und -1,5°C, mehr bevorzugt -5 und -1,5°C, auszusetzen,
- die Sammelvorrichtung für konditioniertes Fleisch konfiguriert ist, um das konditionierte Fleisch aus der Konditioniereinrichtung zu einer Verarbeitungsvorrichtung zum Verarbeiten bei der zweiten Temperatur zu bewegen, und wobei
- die Transportvorrichtung zum Bewegen von verarbeitetem Fleisch konfiguriert ist, um das verarbeitete Fleisch zu einer weiteren Verarbeitung bei einer dritten Temperatur, die von der zweiten Temperatur verschieden ist, zu bewegen.

15. Vorrichtung nach Anspruch 14, wobei das Befördern des Fleischs durch die Beförderungseinrichtung an Merkmale des Fleischs angepasst ist.

16. Vorrichtung nach Anspruch 15, wobei die Merkmale des Fleischs ausgewählt sind aus einem oder mehreren der Folgenden:
dem Gewicht des Fleischs oder
der Breite des Fleischs oder
der Höhe des Fleischs oder
der geometrischen Gestalt des Fleischs oder
der Art des Fleischs.

17. Vorrichtung nach Anspruch 14, 15 oder 16, wobei die Konditioniereinrichtung Mittel zum Steuern der Temperatur und/oder der Geschwindigkeit des zirkulierenden Gases umfasst.

18. Vorrichtung nach Anspruch 17, wobei das Mittel zum Steuern der Temperatur des zirkulierenden Gases einen Temperaturfühler, Gaskonditioniermittel und eine Steuerungseinheit zum Steuern des Gaskonditioniermittels umfasst.

19. Vorrichtung nach Anspruch 17 oder 18, wobei das Mittel zum Steuern der Temperatur des zirkulierenden Gases eine vorprogrammierte Temperaturveränderungsroutine umfasst.

20. Vorrichtung nach einem der Ansprüche 14 bis 19, wobei ein Mittel der Konditioniereinrichtung zum Aussetzen des Fleischs gegenüber dem zirkulierenden Gas mindestens eines von einem Schneckenförderer, einem Einzel- oder Doppelförderer oder einer Mehrzahl von Gestellen und Ablagen zum Lagern des Fleischs ist.

21. Vorrichtung nach einem der Ansprüche 14 bis 20, wobei die Verarbeitungsvorrichtung zum Verarbeiten von Fleisch bei der zweiten Temperatur eine Vorrichtung ist, in welcher das Fleisch portioniert, in Scheiben geschnitten, geformt und/oder zerschnitten wird.

22. Vorrichtung nach einem der Ansprüche 14 bis 21, wobei die Transportvorrichtung zum Bewegen von verarbeitetem Fleisch konfiguriert ist, um das verarbeitete Fleisch zu einer Gefriereinrichtung oder zu einer weiteren Verarbeitung zu bewegen.

23. Vorrichtung nach einem der Ansprüche 14 bis 22, umfassend eine Steuerungseinheit mit einem Computersystem, welches funktionsfähig verbunden ist mit mindestens der Konditioniereinrichtung zum Anpassen oder Steuern von einem oder mehreren von:
- der Geschwindigkeit von zirkulierendem Gas oder
- der Temperatur von zirkulierendem Gas oder
- der Geschwindigkeit der Beförderungseinrichtung der Konditioniereinrichtung,
basierend auf einer Eingabe in Bezug auf eines oder mehrere von der Menge von Fleisch in der Konditioniereinrichtung, der Art von Fleisch in der Konditioniereinrichtung, der Oberflächentemperatur des Fleischs, einer Innentemperatur von mindestens einem Stück Fleisch, der Temperatur des zirkulierenden Gases oder der Geschwindigkeit des zirkulierenden Gases, wodurch die Temperatur des Fleischs die zweite Temperatur erreicht hat, wenn es die Konditioniereinrichtung verlässt.

## Revendications

1. Procédé de conditionnement de viande tel que la transformation ultérieure est optimisée, dans lequel la viande ayant une première température comprise entre -35 et -18°C est introduite dans un conditionneur, à l'intérieur duquel conditionneur on fait circuler un gaz, à l'aide dudit gaz, on fait monter la température de la viande à une deuxième température comprise entre -8 et -1,5°C, de manière préférée, entre -5 et -1,5°C, la viande étant transportée par un transporteur placé à l'intérieur du conditionneur, deuxième dite température à laquelle la viande encore congelée est transportée hors du conditionneur, où ladite viande est transformée à ladite deuxième température, après quoi la viande transformée est amenée à une troisième température différente de ladite deuxième température.

2. Procédé selon la revendication 1, **caractérisé en ce que** des moyens sont fournis pour enregistrer la température d'au moins un morceau de viande à l'intérieur du conditionneur, où la température dudit au moins un morceau de viande est utilisée en tant qu'entrée dans une unité de contrôle préprogrammée, laquelle unité contrôle la température à l'intérieur du conditionneur.

3. Procédé selon la revendication 2, **caractérisé en ce que** les moyens permettant d'enregistrer la température d'au moins un morceau de viande à l'intérieur du conditionneur comprennent des moyens pour enregistrer la température en surface de la viande, et/ou un capteur de température intégré dans l'au moins un morceau de viande pour enregistrer la température interne dudit au moins un morceau de viande.

4. Procédé selon la revendication 1, 2 ou 3, **caractérisé en ce que** la vitesse dudit transporteur placé à l'intérieur du conditionneur est régulée par l'entrée fournie à une unité de contrôle, où ladite entrée découle de :
- la température et/ou la vitesse du gaz,
- la température de la viande et/ou
- la quantité et/ou du type de viande présente à l'intérieur du conditionneur.

5. Procédé selon la revendication 1 ou 2, **caractérisé en ce que** les moyens de conditionnement de gaz et au moins un ventilateur sont placés à l'intérieur du conditionneur, où une unité de contrôle régule la vitesse de l'au moins un ventilateur et ainsi la vitesse du gaz et/ou la température à laquelle les moyens de conditionnement de gaz traitent le gaz, au moyen d'une entrée dans l'unité de contrôle découlant de :
- la température et/ou de la vitesse du gaz à l'intérieur du conditionneur,
- la température en surface de la viande et/ou,
- la quantité et/ou du type de viande présente à l'intérieur du conditionneur.

6. Procédé selon la revendication 4 ou 5 où l'unité de contrôle comprend un ensemble préprogrammé de paramètres à l'intérieur duquel la température du gaz, la vitesse du gaz, la température en surface de la viande et/ou la vitesse du transporteur doivent être régulées, et où la durée depuis le moment où la viande pénètre dans le conditionneur à ladite première température jusqu'au moment où la viande quitte le conditionneur à ladite deuxième température est constante.

7. Procédé selon la revendication 4 ou 5 où l'unité de contrôle comprend un ensemble préprogrammé de paramètres à l'intérieur duquel la température du gaz et/ou la vitesse du gaz doit/doivent être régulée(s) par rapport à la quantité de viande présente à l'intérieur du conditionneur, et où la vitesse du transporteur est ajustée de telle sorte que la viande quitte le conditionneur à ladite deuxième température.

8. Procédé selon l'une quelconque des revendications 1 à 7, dans lequel la viande après avoir été transformée, par exemple formée, pressée, portionnée, tranchée et/ou découpée à ladite deuxième température est renvoyée dans un congélateur, et dans ledit congélateur congelée à ladite première température.

9. Procédé selon l'une quelconque des revendications 1 à 8, dans lequel la deuxième température est comprise entre -5°C et -2,5°C.

10. Procédé selon l'une quelconque des revendications 1 à 9, dans lequel un morceau de viande est doté d'un identifiant unique, par exemple pour la reconnaissance optique ou pour la reconnaissance électronique, et ces moyens pour reconnaître ledit identifiant unique sont fournis à une ou plusieurs positions choisies dans le groupe comprenant l'entrée du conditionneur, au moins un endroit à l'intérieur du conditionneur et à la sortie dudit conditionneur, et où les moyens pour reconnaître l'identifiant unique communiquent avec une unité de contrôle centrale, qui collecte les données du conditionneur et/ou les données sur la viande relatives à la température et/ou à la durée passée dans le conditionneur et stocke ces données relatives au morceau de viande ayant l'identifiant unique.

11. Procédé selon la revendication 10, dans lequel l'identifiant unique au cours de la transformation ultérieure du morceau de viande est copié, de telle sorte que les copies de l'identifiant suivent les portions de viande créées au cours de la transformation ultérieure et après celle-ci.

12. Procédé selon l'une quelconque des revendications 1 à 11, dans lequel le transport par ledit transporteur est adapté aux caractéristiques de la viande.

13. Procédé selon la revendication 12, dans lequel les caractéristiques de la viande sont choisies parmi une ou plusieurs des caractéristiques suivantes :
le poids de la viande ou
la largeur de la viande ou
la hauteur de la viande ou
la forme géométrique de la viande ou
le type de la viande.

14. Appareil pour le conditionnement de viande où ledit appareil comprend :
- une installation d'alimentation,
- un conditionneur avec un transporteur placé à l'intérieur du conditionneur,
- un collecteur de viande conditionnée, et
- un dispositif de transport pour déplacer la viande transformée jusqu'à une transformation ultérieure, dans lequel
- ladite installation d'alimentation est configurée pour amener la viande congelée ayant une première température comprise entre -35 et -18°C dans ledit conditionneur,
- ledit conditionneur est configuré pour transporter la viande à l'aide dudit transporteur placé à l'intérieur du conditionneur et pour faire circuler du gaz à l'intérieur du conditionneur pour exposer la viande au gaz de circulation pour faire monter la température dans la viande à une deuxième température entre -8 et -1,5°C, de manière davantage préférée -5 et -1,5°C,
- ledit collecteur de viande conditionnée est configuré pour déplacer la viande conditionnée du conditionneur vers un dispositif de transformation pour une transformation à ladite deuxième température, et dans lequel
- ledit dispositif de transport pour déplacer la viande transformée est configuré pour déplacer ladite viande transformée vers une transformation ultérieure à une troisième température différente de ladite deuxième température.

15. Appareil selon la revendication 14, dans lequel le transport de la viande par ledit transporteur est adapté aux caractéristiques de la viande.

16. Appareil selon la revendication 15, dans lequel les caractéristiques de la viande sont choisies parmi une ou plusieurs des caractéristiques suivantes :
le poids de la viande ou
la largeur de la viande ou
la hauteur de la viande ou
la forme géométrique de la viande ou
le type de la viande.

17. Appareil selon la revendication 14, 15 ou 16, dans lequel ledit conditionneur comprend des moyens pour contrôler la température et/ou la vitesse du gaz de circulation.

18. Appareil selon la revendication 17, dans lequel les moyens pour contrôler la température du gaz de circulation comprennent un capteur de température, des moyens de conditionnement du gaz et une unité de contrôle pour contrôler les moyens de conditionnement du gaz.

19. Appareil selon la revendication 17 ou 18, dans lequel les moyens pour le contrôle de la température du gaz de circulation comprennent une routine de changement de température préprogrammée.

20. Appareil selon l'une quelconque des revendications 14 à 19, dans lequel les moyens du conditionneur pour exposer la viande au gaz de circulation sont au moins l'un d'un transporteur à hélice, d'un transporteur simple ou double ou d'une pluralité de bacs et de plateaux pour disposer la viande.

21. Appareil selon l'une quelconque des revendications 14 à 20, dans lequel ledit dispositif de transformation pour la transformation de la viande à ladite deuxième température est un dispositif où la viande est portionnée, tranchée, formée et/ou découpée.

22. Appareil selon l'une quelconque des revendications 14 à 21, dans lequel ledit dispositif de transport pour déplacer la viande transformée est configuré pour déplacer ladite viande transformée vers une installation de congélation ou vers une transformation ultérieure.

23. Appareil selon l'une quelconque des revendications 14 à 22, comprenant une unité de contrôle comportant un système informatique branché opérationnellement au moins audit conditionneur pour ajuster ou contrôler une ou plusieurs parmi
- la vitesse du gaz de circulation ou
- la température du gaz de circulation ou
- la vitesse du transporteur de conditionneur,
sur la base d'une entrée relative à un ou plusieurs éléments parmi la quantité de viande dans le conditionneur, le type de viande dans le conditionneur, la température en surface de la viande, une température intérieure d'au moins un morceau de viande, la température du gaz de circulation ou la vitesse du gaz de circulation, moyennant quoi la température de la viande a atteint ladite deuxième température lorsqu'elle quitte le conditionneur.
